(19)

Europäisches
Patentamt
European
Patent Office
Office européen
des brevets

(11) **EP 2 555 529 A1**

(12) **EUROPEAN PATENT APPLICATION**
published in accordance with Art. 153(4) EPC

(43) Date of publication:
**06.02.2013 Bulletin 2013/06**

(51) Int Cl.:
**H04N 13/04** *(2006.01)*    **G09G 3/20** *(2006.01)*
**G09G 3/36** *(2006.01)*

(21) Application number: **11759324.4**

(22) Date of filing: **18.03.2011**

(86) International application number:
**PCT/JP2011/056536**

(87) International publication number:
**WO 2011/118518 (29.09.2011 Gazette 2011/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.03.2010 JP 2010067832**

(71) Applicant: **JVC KENWOOD Corporation
Kanagawa 221-0022 (JP)**

(72) Inventor: **AIBA, Hideki
Yokohama-shi
Kanagawa 221-0022 (JP)**

(74) Representative: **Schmidbauer, Andreas Konrad et
al
Wagner & Geyer
Patent- und Rechtsanwälte
Gewürzmühlstrasse 5
80538 München (DE)**

(54) **3D IMAGE DISPLAY DEVICE**

(57)    The disclosed 3D image display device has: a delay unit (10) that delays right-eye image data (RI(n)) by one frame and outputs the result as delayed right-eye image data (RI(n-1)); a data emphasis unit (20a) that outputs right-eye image emphasis data (RE(n)) on the basis of the difference between the right-eye image data (RI(n)) and left-eye image data (LI(n)); a data emphasis unit (20b) that outputs left-eye image emphasis data (LE (n)) on the basis of the difference between the left-eye image data (LI(n)) and the delayed right-eye image data (RI(n-1)); and a time-division output unit (30) that takes in the right-eye image emphasis data (RE(n)) and the left-eye image emphasis data (LE(n)) as input, stores said data in a frame memory (31), performs time division on said data, using a prescribed frequency, and outputs the result.

FIG. 1

**Description**

**TECHNICAL FIELD**

The present invention relates to a 3D image display device which outputs image data for left and right eyes time-divisionally to perform a stereoscopic displaying.

**BACKGROUND ARTS**

There is a generally known 3D image display device intended to improve ghost (crosstalk) caused by a response delay of display elements, such as liquid crystal elements.

For instance, there is published one prior art of: comparing the gradation value of input image data in the latest field with that of image data in the field displayed immediately prior to the latest field; generating, as the gradation voltage for displaying an image in the latest field, a gradation voltage for emphasizing a gradation change from the immediately-preceding field to the latest field to be displayed subsequently; and applying the gradation voltage to a liquid crystal display panel. In this art, to accelerate a liquid-crystal response speed against the gradation change and also compensate a delay of the response, a conversion table of gradation values is prepared in a prescribed memory, in advance. Then, an optimal gradation voltage for changing the current liquid-crystal displaying condition to a gradation to be displayed subsequently is produced by a computing unit arranged behind a frame memory (see Patent Document 1).

In addition, there is also published another prior art of using a filter (time-axis emphasis circuit) for emphasizing the image data in the direction of time-axis to prevent an image lag due to a delay of the response speed in the liquid crystal display device although this prior art is not a background art related to a 3D image display device (see Patent Document 2).

**PRIOR ART DOCUMENTS**

**PATENT DOCUMENTS**

Patent Document 1: Japanese Patent Publication Laid-open No. 2006-157775
Patent Document 2: Japanese Patent Publication Laid-open No. 2006-337448

**SUMMARY OF THE INVENTION**

**PROBLEMS TO BE SOLVED**

In the 3D image display device of Patent Document 1, however, the computing unit subsequent to the frame memory memorizing left-eye image data to be visible to an observer's left eye and right-eye image data to be visible to an observer's right eye in units of frame produces the optimal gradation voltage for the left-eye image data and the right-eye image data. Therefore, when producing the gradation voltage, both the left-eye image data and the right-eye image data have to be calculated to increase the memory capacity and the number of input/output terminals of the memory. Consequently, as the throughput of data transfer to and from the memory is increased to cause increases in the number of memories and the wiring area, the device is complicated or large-sized to cause an increase in the manufacturing cost.

In addition, as the frame rate of image data is elevated in displaying the left-eye image data and the right-eye image data alternately, the operating speed of the computing unit is accelerated to increase a burden on the device besides the problem of high throughput.

Under the above-mentioned problems, an object of the present invention is to provide a 3D image display device which is simple in constitution and enables a burden on the device to be reduced in processing the data.

**SOLUTIONS TO THE PROBLEMS**

In order to attain the above-mentioned object, according to the first aspect of the present invention, there is provided a 3D image display device comprising: a delay unit configured to delay one image data consisting of either right-eye image data or left-eye image data by one frame period and output the one image data as delayed data; a first data emphasis unit configured to emphasize the one image data by a first emphasis coefficient on a basis of a difference between the right-eye image data and the left-eye image data and output a first emphasis data; a second data emphasis unit configured to emphasize the other image data of either the right-eye image data or the left-eye image data by a second emphasis coefficient on the basis of a difference between the other image data and the delay data delayed one frame period by the delay unit and output a second emphasis data; and a time-division output unit configured to store the first emphasis data and the second emphasis data and output the first emphasis data and the second emphasis data at a prescribed frame rate time-divisionally.

According to the second aspect of the present invention, there is also provided a 3D image display device comprising: a delay unit configured to delay one image data consisting of either right-eye image data or left-eye image data by one frame period and output the one image data as delayed data; a first data emphasis unit configured to emphasize the one image data by a first emphasis coefficient on a basis of a difference between the right-eye image data and the left-eye image data and output a first emphasis data; a second data emphasis unit configured to emphasize the other image data of either the right-eye image data or the left-eye image data by a second emphasis coefficient on the basis of a difference between the other image data and the delay data delayed one frame period by the delay unit and output a second emphasis data; and a time-division output unit configured to store the first emphasis data, the one image data, the second emphasis data and the other image data and output these data in the order corresponding to the first emphasis data, the one image data, the second emphasis data and the other image data at a prescribed frame rate time-divisionally.

According to the third aspect of the present invention, there is also provided a 3D image display device comprising: a delay unit configured to delay one image data consisting of either right-eye image data or left-eye image data by one frame period and output the one image data as delayed data; a first data emphasis unit configured to emphasize the one image data by a first emphasis coefficient on a basis of a difference between the right-eye image data and the left-eye image data and output a first emphasis data; a second data emphasis unit configured to emphasize the other image data of either the right-eye image data or the left-eye image data by a second emphasis coefficient on the basis of a difference between the other image data and the delay data delayed one frame period by the delay unit and output a second emphasis data; a third data emphasis unit configured to emphasize the one image data by a second emphasis coefficient smaller in its emphasis gain than the first emphasis coefficient on the basis of a difference between the one image data and the other image data and output a resultant third emphasis data; a fourth data emphasis unit configured to emphasize the one image data by a fourth emphasis coefficient smaller in its emphasis gain than the second emphasis coefficient on the basis of a difference between the other image data and the delay data and output a fourth emphasis data; and a time-division output unit configured to store the first emphasis data, the third emphasis data, the second emphasis data and the fourth emphasis data and output these data in the order corresponding to the first emphasis data, the third emphasis data, the second emphasis data and the fourth emphasis data at a prescribed frame rate time-divisionally.

According to the fourth aspect of the present invention, the 3D image display device further comprises: a frame-rate converting unit configured to convert the frame rate to a frame rate more than a second prescribed value and output a frame rate to the delay unit and the first and second data emphasis units when a frame rate of the left-eye image data and the right-eye image data is less than a first prescribed value.

According to the fifth aspect of the present invention, there is also provided a 3D image display device comprising: a delay unit configured to delay one image data consisting of either right-eye image data or left-eye image data by one frame period and output the one image data as delayed data; a first data emphasis unit configured to emphasize the one image data by a first emphasis coefficient on a basis of a difference between the right-eye image data and the left-eye image data and output a first emphasis data; a second data emphasis unit configured to emphasize the other image data of either the right-eye image data or the left-eye image data by a second emphasis coefficient on the basis of a difference between the other image data and the delay data delayed one frame period by the delay unit and output a second emphasis data; a fifth data emphasis unit configured to emphasize one data of the one image data and the other image data, the one data being displayed in advance of the other data in chronologic order based on an identical frame, by a fifth emphasis coefficient on the basis of a difference between the one image data and the other image data and output a resultant fifth emphasis data; and a time-division output unit configured to store the first emphasis data, the second emphasis data and the fifth emphasis data and output these data in the order corresponding to one emphasis data of the first emphasis data and the second emphasis data, the one emphasis data being displayed in advance of the other emphasis data in chronologic order, the other emphasis data, the fifth emphasis data, and the other emphasis data time-divisionally, thereby converting these data more than a prescribed frequency for outputting.

**EFFECTS OF THE INVENTION**

According to the 3D image display devices of the present invention, it is possible to simplify the constitution of the device and reduce a burden on the device in processing the data.

## BRIEF DESCRIPTION OF THE DRAWINGS

[Fig. 1] Fig. 1 is a block diagram showing the constitutional example of a 3D image display device in accordance with a first embodiment of the present invention.

[Fig. 2] Fig. 2 is a view showing an example of a data emphasis unit installed in the 3D image display device of the first embodiment of the present invention.

[Fig. 3] Fig. 3 is a diagram showing the throughput of a memory by a conventional example of executing the time-axis emphasis processing to left-eye and right-eye image data after the time-division process.

[Fig. 4] Fig. 4 is a diagram showing the throughput of a memory in the 3D image display device of the first embodiment of the present invention.

[Fig. 5] Fig. 5 is a block diagram showing the constitutional example of a 3D image display device in accordance with a second embodiment of the present invention.

[Fig. 6] Fig. 6 is a diagram explaining the response characteristics of a time-division output unit that the 3D image display device of the second embodiment of the present invention includes.

[Fig. 7] Fig. 7 is a diagram showing the throughput of a memory by the conventional example of executing the time-axis emphasis processing to the left-eye and right-eye image data after the time-division process.

[Fig. 8] Fig. 8 is a diagram showing the throughput of a memory in the 3D image display device of the second embodiment of the present invention.

[Fig. 9] Fig. 9 is a block diagram showing the constitutional example of a 3D image display device in accordance with a third embodiment of the present invention.

[Fig. 10] Fig. 10 is a diagram explaining the response characteristics of a time-division output unit that the 3D image display device of the third embodiment of the present invention includes.

[Fig. 11] Fig. 11 is a block diagram showing the constitutional example of a 3D image display device in accordance with a fourth embodiment of the present invention.

[Fig. 12] Fig. 12 is a block diagram showing the constitutional example of a 3D image display device in accordance with a fifth embodiment of the present invention.

[Fig. 13] Fig. 13 is a diagram showing the state after the time-division process in the time-division output unit 70 that the 3D image display device of the fifth embodiment of the present invention includes.

[Fig. 14] Fig. 14 is a diagram showing the throughput of a memory by the conventional example of executing the time-axis emphasis processing to the left-eye and right-eye image data after the time-division process.

[Fig. 15] Fig. 15 is a diagram showing the throughput of a memory when the time-division output unit of the 3D image display device of the fifth embodiment of the present invention reads out data from a frame memory time-divisionally while executing a pull-down processing.

## EMBODIMENTS OF THE INVENTION

The first to fifth embodiments of the 3D image display device of the present invention will be described below.

<First Embodiment>

Based on left-eye image data and right-eye image data inputted at 60 (frame/sec), the first embodiment will be illustrated with a 3D image display device which executes a time-division process in the final time-series outputting order corresponding to first left-eye image and second right-eye image to output 3D images at 120 (frame/sec). Note that the left-eye image data is image data to be visually recognized by an observer's left eye, while the right-eye image data is image data to be visually recognized by an observer's right eye.

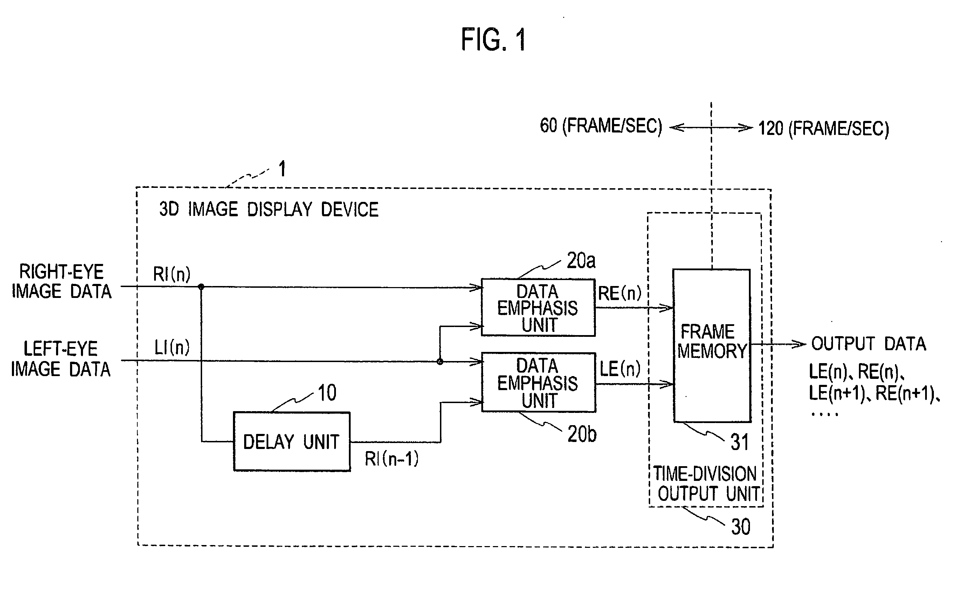

Fig. 1 is a block diagram showing the constitutional example of the 3D image display device 1 of the first embodiment.

As shown in Fig. 1, the 3D image display device 1 comprises a delay unit 10, a data emphasis unit 20a, the data emphasis unit 20b and a time-division output unit 30.

The delay unit 10 delays the right-eye image data RI(n) of a target frame $\underline{n}$ by one frame period and output the resultant data as "delayed right-eye image data RI(n-1)". Assume here that the frame number of a target frame is represented by "n", and the number of a frame delayed from the target frame with a delay of one frame period is represented by "n-1".

Based on a difference between the right-eye image data RI(n) of the target frame $\underline{n}$ and the left-eye image data LI(n) of the target frame $\underline{n}$, the data emphasis unit 20a emphasizes the right-eye image data RI(n) and outputs the resultant data as "right-eye image emphasis data RE(n)".

Based on a difference between the delayed right-eye image data RI(n-1) delayed with a delay of one frame period by the delay unit 10 and the left-eye image data LI(n) of the target frame n, the data emphasis unit 20b emphasizes the left-eye image data LI(n) and outputs the resultant data as "left-eye image emphasis data LE(n)".

The time-division output unit 30 inputs and retains the right-eye image emphasis data RE(n) outputted from the data emphasis unit 20a and the left-eye image emphasis data LE(n) outputted from the data emphasis unit 20b, and sequentially time-divides the so-retained data in chronological order, based on a predetermined frequency, namely, 120 (frame/sec) equal to the double speed rate of the input frequency 60 (frame/sec) of the right-eye image data RI(n) and the left-eye image data LI(n).

It is noted here that the data inputted into the 3D image display device 1 consists of two kinds of data: the left-eye image data LI(n) and the right-eye image data RI(n) which are in the relationship of synchronization. These data may be read from 3D compatible BD (Blu-ray Disc) or a 3D compatible DVD (Digital Versatile Disc) compatible with stereo (3D) displaying or received through digital broadcasting and these data are inputted into the 3D image display device in parallel. Note that "n" is a natural number representing the frame number of both the left-eye image data LI(n) and the right-eye image data RI(n).

In addition, as the image of the 3D image display device 1 is synchronized with switching of the left-eye image data LI(n) or the right-eye image data RI(n), an observer can visually recognize a stereo image by watching left and right pictures through 3D glasses with liquid-crystal shutters operating at 120 (frame/sec) or 3D glasses with polarization filters.

Next, the operation of the 3D image display device 1 of Fig. 1 will be described.

First, when two kinds of data: $n^{th}$ left-eye image data LI(n) and right-eye image data RI(n) for stereoscopic display are inputted into the 3D image display device 1, the left-eye image data LI(n) and the right-eye image data RI(n) will be inputted into the data emphasis unit 20a, as they are.

On the other hand, only the right-eye image data RI(n) is inputted into the delay part 10 and further delayed with one frame period by the delay part 10. Therefore, at this timing, image data preceding this image data RI(n) by one frame, that is, $(n-1)^{th}$ right-eye image data RI(n-1) is outputted from the delay part 10. As a result, both the left-eye image data LI(n) and the delayed right-eye image data RI(n-1) delayed with one frame period are inputted to the data emphasis unit 20b.

As described later, the data emphasis unit 20a emphasizes the right-eye image data RI(n) based on a difference between the right-eye image data RI(n) and the left-eye image data LI(n) and outputs so-emphasized image data as "right-eye image emphasis data RE(n)" to the time-division output unit 30.

As described later, the data emphasis unit 20b emphasizes the delayed right-eye image data RI(n-1) delayed with one frame period, based on a difference between the left-eye image data LI(n) and the delayed right-eye image data RI(n-1) one-frame delayed by the delay unit 10 and outputs so-emphasized image data as "left-eye image emphasis data LE(n)" to the time-division output unit 30.

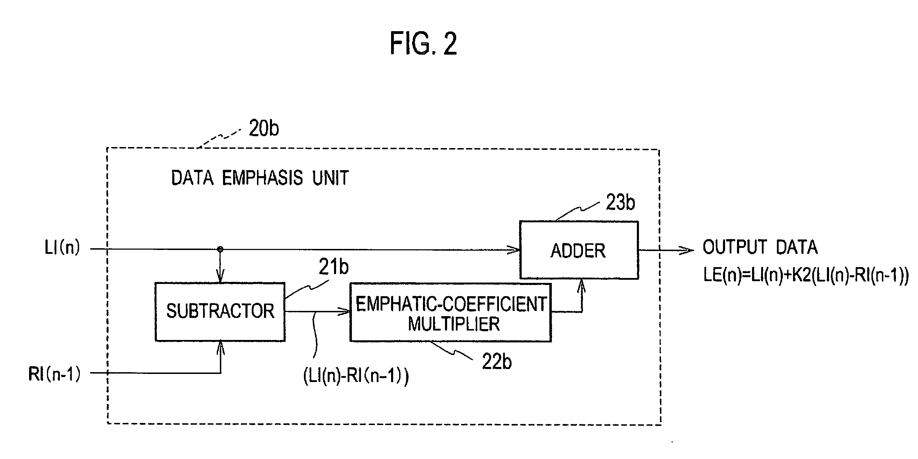

Fig. 2 is a view showing an example of the data emphasis unit 20b that the 3D image display device 1 includes. Note that, as the data emphasis units 20a, 20b have constitutions identical to each other except for a later-mentioned emphasis coefficient, the constitution of the data emphasis unit 20b having the delayed right-eye image data RI (n-1) inputted will be described representatively.

In Fig. 2, the data emphasis unit 20b includes a subtractor 21b, an emphasis coefficient multiplier 22b and an adder 23b and calculates the left-eye image emphasis data LE(n) by use of the following equation:

$$LE(n) = LI(n) + K2\,(LI(n) - RI(n-1)). \dots (1)$$

Specifically, when the data emphasis unit 20b inputs the left-eye image data LI(n) for the present frame and the delayed right-eye image data RI(n-1) delayed by one frame and outputted from the delay part 10, the subtractor 21b subtracts the delayed right-eye image data RI(n-1) from the left-eye image data LI(n) and successively outputs the subtraction result (LI(n) - RI(n-1)) to the emphasis coefficient multiplier 22b.

The emphasis coefficient multiplier 22b multiplies the subtraction result (LI(n) - RI(n-1)) from the subtractor 21b by an emphasis coefficient K2, and outputs the multiplication result K2 (LI(n) - RI(n-I)) to the adder 23b.

The adder 23b adds the inputted left-eye image data LI(n) to the multiplication result K2 (LI(n) - RI(n-1)) to obtain the left-eye image emphasis data LE(n).

Then, the left-eye image emphasis data LE(n) is outputted from the data emphasis unit 20b and inputted into the time-division output unit 30.

In addition, though it is not shown, the data emphasis unit 20a also calculates the right-eye image emphasis data RE(n) by use of the following equation:

$$RE(n) = RI\,(n) + K1\,(RI(n) - LI\,(n{-}1)), \ldots (2)$$

as similar to Fig. 2.

Specifically, when the data emphasis unit 20a inputs the right-eye image data RI(n) and the left-eye image data LI(n), the right-eye image data RI(n) is emphasized by the emphasis coefficient K1, based on a difference between the right-eye image data RI(n) and the left-eye image data LI(n). Then, the right-eye image emphasis data RE(n) is outputted from the data emphasis unit 20a to the time-division output unit 30.

Note that, as the data emphasis units 20a, 20b are provided for compensation of liquid-crystal responsibility etc., the respective emphasis coefficients K1, K2 are set to optimal values on the ground of calculations or experiments, depending on the response characteristics of liquid-crystal on use. Moreover, it is known that the response characteristics of liquid crystal depends on levels of data, ambient temperatures, etc. and therefore, it is effective for the units to have functions of adjusting these emphasis coefficients K1, K2 in correspondence with levels of data, ambient temperatures, etc. adaptively. As for concrete emphasis coefficients K1, K2 of the data emphasis units 20a, 20b, here, they may be established so as to be equal to or different from each other, without being limited to specific values.

Then, the time-division output unit 30 inputs the right-eye image emphasis data RE(n), RE(n+1), RE(n+2), ... and the left-eye image emphasis data LE(n), LE(n+1), LE(n+2), ... from the data emphasis units 20a, 20b and further stores them in the frame memory 31 temporarily. Then, the stereo display is carried out by alternately reading out the time-axis emphasized image data, in chronologic order corresponding to LE(n), RE(n), LE(n+1), RE(n+1), LE(n+2), RE(n+2), ... at 120 (frame/sec) which is twice (double-speed frame rate) as much as the frequency (i.e. 60 frame/sec) of each input image data.

Next, the improvement effect of the memory throughput by the 3D image display device 1 will be described.

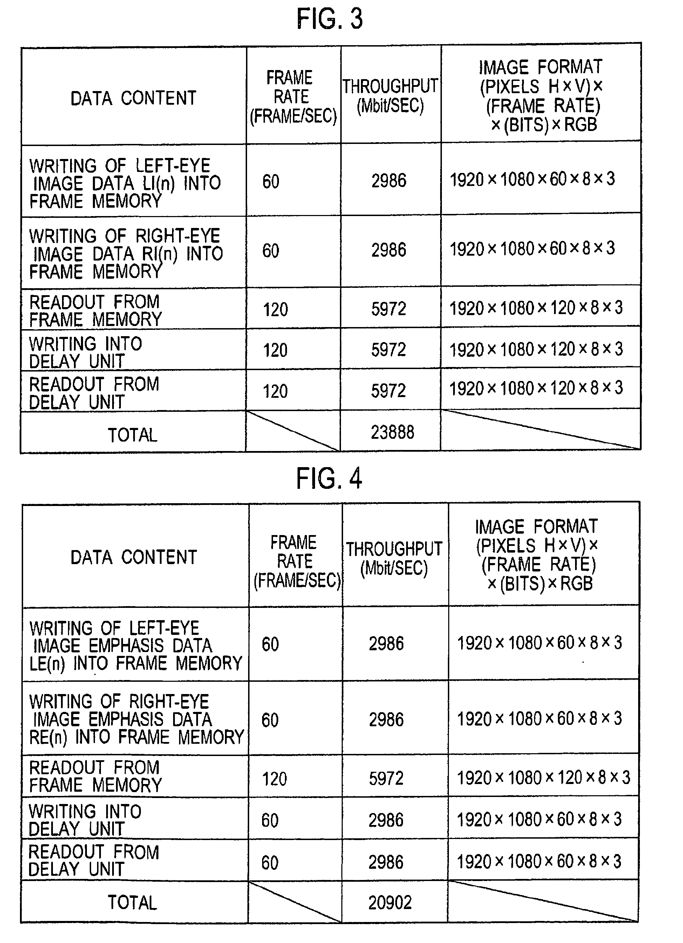

For comparison, Fig. 3 is a diagram showing the memory throughput of a conventional example of executing the time-axis emphasis processing to the left-eye image data and the right-eye image data after the time-division process. Fig. 4 is a diagram showing the memory throughput by the 3D image display device 1.

In the conventional example, the time-axis emphasis processing is performed after the time-division process of the left-eye image data and the right-eye image data. On the contrary, according to the 3D image display device 1, the time-axis emphasis processing is previously applied to each of the right-eye image data RI(n) and the left-eye image data LI(n) and thereafter, the time-division process is carried out.

Note that the image format condition in calculating is as follows: horizontal 1920 × 1080 pixels on HDTV standard; frame rate of 60 (frame/sec) on input side; frame rate after time-division process of 120 (frame/sec); data bit length of 8 (bit); and 3(ch) of RGB. Note that this image format condition is applied to the other embodiments mentioned later similarly.

As will be obvious from a comparison of the frame rate of Fig. 3 (conventional example) with that of Fig. 4 (first Embodiment), the writing and reading operations into and from the delay unit in the conventional example are characterized by the frame rate of 120 (frame/sec) and the throughput of 5972 (Mbit/sec) respectively since the delay unit and the data emphasis unit are arranged on a subsequent stage of the time-division process. On the contrary, according to the first embodiment shown in Fig. 1, since the delay part 10 and the data emphasis units 20a, 20b are arranged on a preceding stage of the time-division process, the writing and reading operations into and from the delay unit 10 are characterized by the frame rate of 60 (frame/sec) and the throughput of 2986 (Mbit/sec) respectively, which are equal to half of those of the conventional example respectively.

As a result, when comparing the total of throughputs in Fig. 3 (conventional example) with that in Fig. 4 (1st Embodiment), it is found that the throughputs is improved in the first embodiment since the total of throughputs in the first embodiment becomes 20902 (Mbit/sec) as shown in Fig. 4, while the total of throughputs in the conventional example becomes 23888 (Mbit/sec) as shown in Fig. 3.

Thus, according to the first embodiment, as the 3D image display device 1 includes the delay unit 10 that delays the right-eye image data RI(n) by one frame and outputs the result as the delayed right-eye image data RI(n-1), the data emphasis unit 20a that emphasizes the right-eye image data RI(n) on the basis of the difference between the right-eye image data RI(n) and the left-eye image data LI(n) and further outputs the result as the right-eye image emphasis data RE(n), the data emphasis unit 20b that emphasizes the left-eye image data LI(n) on the basis of the difference between the left-eye image data LI(n) and the delayed right-eye image data RI(n-1) delayed with one frame by the delay unit 10 and further outputs the result as the left-eye image emphasis data LE(n) and the time-division output unit 30 that retains the right-eye image emphasis data RE(n) and the left-eye image emphasis data LE(n) in the frame memory 31 and time-divisionally outputs these data in chronologic order on the basis of 120 (frame/sec) as the predetermined frequency, the time-axis emphasis processing for compensating delay etc. of the response characteristics of liquid crystal is performed before the time-division process. As a result, in comparison with an execution of the time-axis emphasis processing after the time-division process, it is possible to reduce the number of input/output terminals included in the delay unit and the frame memory and also possible to lower a throughput in data transmission against the delay unit or the frame memory, allowing a reduction of its wiring area. Thus, with a simplified device constitution, it is possible to reduce a burden on the device in processing the data.

Consequently, according to the 3D image display device 1, in addition to the reduction of manufacturing cost as well as the reduction of a burden on the device in processing the data, it is possible to reduce the crosstalk between the right-eye image data and the left-eye image data when using a display device having slow responsibility as typified by a liquid crystal display device.

Although the first embodiment has been illustrated as an example of the 3D image display device 1 which is constructed so as to write the left-eye image emphasis data LE(n) obtained by emphasizing the left-eye image data LI (n) of the target frame "n" and the right-eye image emphasis data RE(n) obtained by emphasizing the right-eye image data RI(n) of the target frame "n" into the frame memory and also constructed so as to alternately readout these data thereby displaying stereo images in the order corresponding to the left-eye image and the right-eye image, as the final chronologic order, other modifications can be implemented.

For instance, on the premise of writing the right-eye image emphasis data RE(n) obtained by emphasizing the right-eye image data RI(n) of the target frame "n" and the left-eye image emphasis data LE(n) obtained by emphasizing the left-eye image data RI(n) of the target frame "n" into the frame memory, the 3D image display device may be constructed so as to alternately readout these data thereby displaying stereo images in the order corresponding to the right-eye image and the left-eye image, as the chronologic order. Such a modification is applicable to the second to fifth embodiments as well.

<Second Embodiment>

Next, the 3D image display device 2 of the second embodiment will be described.

Based on the left-eye image data and the right-eye image data inputted at 60 (frame/sec), the second embodiment will be illustrated with the 3D image display device adapted so as to output stereo images of 240 (frame/sec) after time-dividing these data in the order corresponding to firstly left-eye image and next right-eye image, as the final chronologic order.

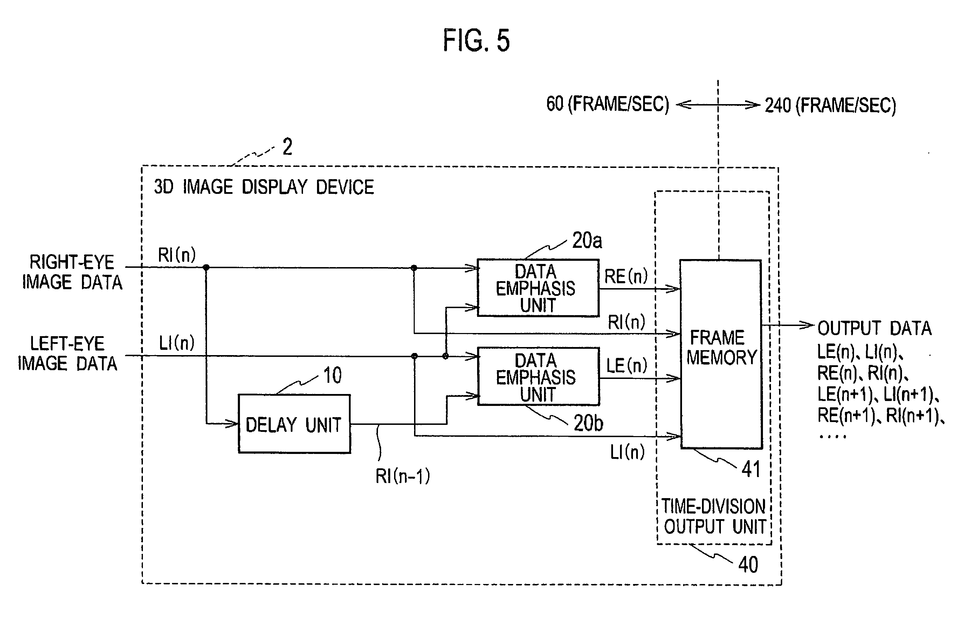

Fig. 5 is a block diagram showing the constitutional example of the 3D image display device 2 related to the second embodiment.

As shown in Fig. 5, the 3D image display device 2 comprises the delay unit 10, the data emphasis unit 20a, the data emphasis unit 20b and a time-division output unit 40. Note that constituents identical to those of the 3D image display device 1 are indicated with the same reference numerals respectively, and their descriptions are eliminated.

The time-division output unit 40 is constructed so as to input and retains the right-eye image emphasis data RE(n) outputted in emphasis from the data emphasis unit 20a, the left-eye image emphasis data LE(n) outputted in emphasis from the data emphasis unit 20b, the right-eye image data RI(n) before being emphasized by the data emphasis unit 20a and the left-eye image data LI(n) before being emphasized by the data emphasis unit 20b and time-divisionally output these data on the basis of 240 (frame/sec) as a prescribed frequency.

Thus, while the left-eye image emphasis data and the right-eye image emphasis data after the time-axis emphasis processing are alternately outputted at 120 (frame/sec) as the double speed rate in the first embodiment, the left-eye image data and the right-eye image data before and after the time-axis emphasis processing are time-divided at 240 (frame/sec) as the quad speed rate in the second embodiment. Namely, in the second embodiment, the data is time-divisionally displayed, in the order corresponding to the left-eye image emphasis data LE(n), the left-eye image data LI(n), the right-eye image emphasis data RE(n) and the right-eye image data RI(n).

The reason for time-dividing the data at 240 (frame/sec) as the quad speed rate in the second embodiment will be explained in brief.

In case of a hold-type display device such as a liquid crystal display device (e.g. TFT liquid crystal display), the writing-and-scanning operation of image data in the TFT liquid crystal display is performed in the order of lines, so that the image data written in the TFT liquid crystal display is kept on display until next writing of the image data is started. That is, if shutter glasses for left and right eyes are simply opened alternately, then an area where left-eye image and right-eye image are mixed with each other (cross talk) is produced. In order to solve this problem, the writing-and-scanning operation of image data in the TFT liquid crystal display should be done in a short time as possible to ensure a hold time (equal to a vertical blanking interval) up till the writing of image data in the next frame, and the shutter glasses have to be opened in timing synchronized with this hold time.

However, if the compensation in the responsibility of liquid crystal display by use of this method is applied to the 3D image display device 1 of the first embodiment, an emphasized image is also held for a period of one frame. As a result, this means that the original purpose of ensuring a period when the images are being displayed stably is not considered.

Therefore, in the time-division output unit 40 that the 3D image display device 2 of the second embodiment includes, the time-division process is performed in the order corresponding to (1) the left-eye image emphasis data LE (n) on completion of the time-axis emphasis processing, (2) the left-eye image data LI(n) subjected to no time-axis emphasis processing, (3) the right-eye image emphasis data RE(n) on completion of the time-axis emphasis processing and (4) the right-eye image data RI(n) subjected to no time-axis emphasis processing, to repeatedly output the time-divided data for display. Thus, in the second embodiment, only when switching to output the data from the left-eye image data to the right-eye image data and vice versa, it is executed to output the left-eye image emphasis data LE(n) and the right-eye image emphasis data RE(n) both subjected to the time-axis emphasis processing for compensation in the responsibility of liquid crystal display and subsequently, the left-eye image data LI(n) and the right-eye image data RI (n) both subjected to no time-axis emphasis processing are outputted. In this way, with the output form mentioned above, it is possible to ensure a stable period for displaying images and improve a cross talk between the left-eye image data and the right-eye image data to which the time-axis emphasis processing is not applied, furthermore.

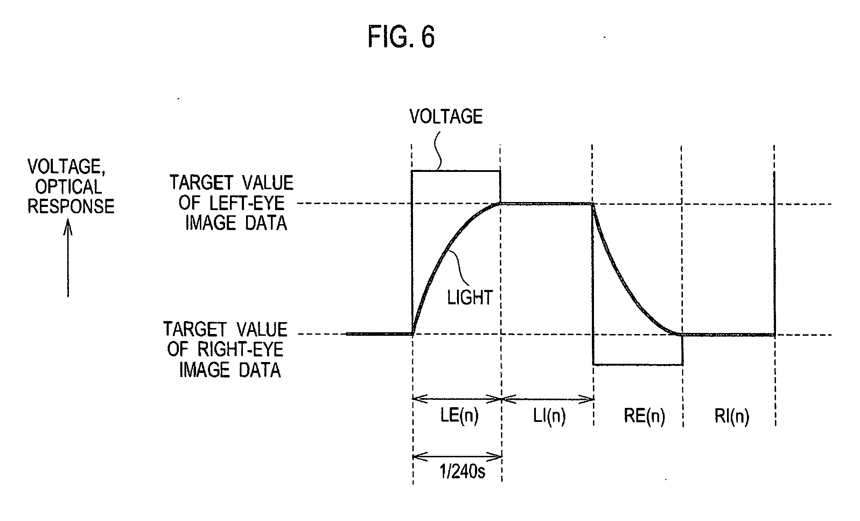

Fig. 6 is a diagram explaining the response characteristics of the time-division output unit 40 that the 3D image display device 2 includes.

As shown in Fig. 6, since the left-eye image data LI(n) subjected to no time-axis emphasis processing is outputted after the output of the left-eye image emphasis data LE(n) on completion of the time-axis emphasis processing, the outputting period of the left-eye image data LI(n) becomes a stable period. Similarly, since the right-eye image data RI(n) subjected to no time-axis emphasis processing is outputted after the output of the right-eye image emphasis data RE(n) on completion of the time-axis emphasis processing, the outputting period of the right-eye image data RI(n) becomes a stable period. As a result, the cross talk can be improved furthermore.

Similarly to the 3D image display device 1, the memory throughput by the 3D image display device 2 will be explained in comparison with the conventional example where the time-axis emphasis processing is carried out after the time-division process.

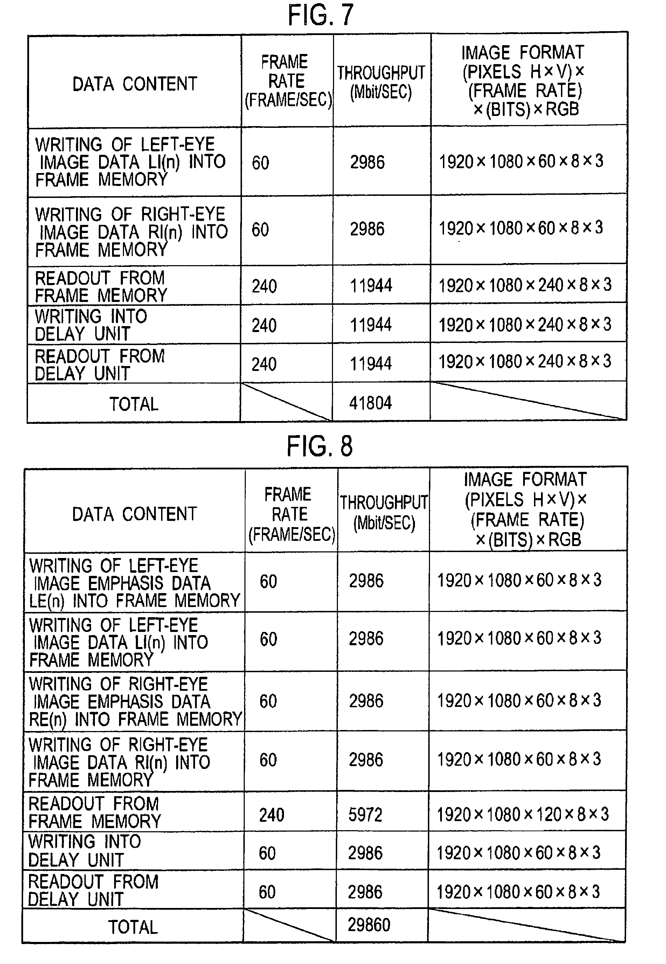

Fig. 7 shows the memory throughput of the conventional example where the left-eye image data and the right-eye image data are time-axis emphasized after the time-division process, at 240 (frame/sec) displaying. On the other hand, Fig. 8 is a diagram showing the memory throughput of the 3D image display device at 240 (frame/sec) displaying.

Here, in the calculation of memory throughput according to the conventional example, the writing to a frame memory is carried out with respect to two kinds of data: left-eye image data and right-eye image data, namely, left screen and right screen. While, the readout from a frame memory is calculated as operations of reading each of the left-eye image data and the right-eye image data twice continuously at quad-speed. Here, we compare the conventional example with the present invention with respect to the total of throughputs, as shown in Fig. 7. Thus, in the conventional example where the left-eye image data and the right-eye image data are emphasized in time-axis after time-dividing these data at 240 (frame/sec) displaying, the total of throughputs becomes 41804 (Mbit/second): the throughput for writing the left-eye image data LI(n) and the right-eye image data RI(n) at 60 (frame/sec) is 2986 (Mbit/sec) each; the throughput for reading out of the frame memory at 240 (frame/sec) as quad-speed is 11944 (Mbit/sec); and the throughput for writing/reading out of the delay unit at 240 (frame/sec) is 11944 (Mbit/sec).

On the other hand, as shown in Fig. 8, according to the 3D image display device 2, as the throughputs for writing the left-eye image emphasis data LE(n), the left-eye image data LI(n), the right-eye image emphasis data RE(n) and the right-eye image data RI(n) into the frame memory 41 at 60 (frame/sec) become 2986 (Mbit/second) respectively, the throughput for reading out of the frame memory 41 at 240 (frame/sec) as quad-speed becomes 5972 (Mbit/second) and the throughput for writing/reading out of the delay unit 10 at 60 (frame/sec) becomes 2986 (Mbit/second), the total of throughputs becomes 29860 (Mbit/second).

Thus, in case of 240 (frame/sec) displaying by the conventional example where the left-eye image data and the right-eye image data are emphasized in time-axis after executing the time-division process, the total of memory throughputs becomes 41804 (Mbit/second), while the total of memory throughputs in the 3D image display device 2 becomes 29860 (Mbit/second), representing an improvement in the memory throughputs.

Therefore, according to the 3D image display device 2 of the second embodiment, similarly to the 3D image display device 1 of the first embodiment, the time-axis emphasis processing for compensating delay etc. of the response characteristics of liquid crystal is performed before the time-division process. As a result, comparing with an execution of the time-axis emphasis processing after the time-division process, it is possible to reduce the number of input/output terminals included in the delay unit and the frame memory and also possible to lower a throughput in data transmission against the delay unit and the frame memory, allowing a reduction of its wiring area. Thus, with a simplified device constitution, it is possible to reduce a burden on the device in processing the data.

In the 3D image display device 2, especially, since the time-division process is performed in the order corresponding to the left-eye image emphasis data LE(n), the left-eye image data LI(n), the right-eye image emphasis data RE(n) and the right-eye image data RI(n) and successively, these data are repeatedly outputted to display them, the left-eye image emphasis data LE(n) and the right-eye image emphasis data RE(n) both subjected to the time-axis emphasis processing for compensation in the responsibility of liquid crystal are outputted only when switching to output the data from the left image data to the right image data and vice versa, while the left-eye image data LI(n) and the right-eye image data RI(n) are outputted subsequently. In this way, with the output form mentioned above, it is possible to ensure a stable period for displaying images and improve a cross talk between the left-eye image data and the right-eye image data to which no time-axis emphasis processing is applied in comparison with the 3D image display device 1.

<Third Embodiment>

Next, the 3D image display device 3 of the third embodiment will be described.

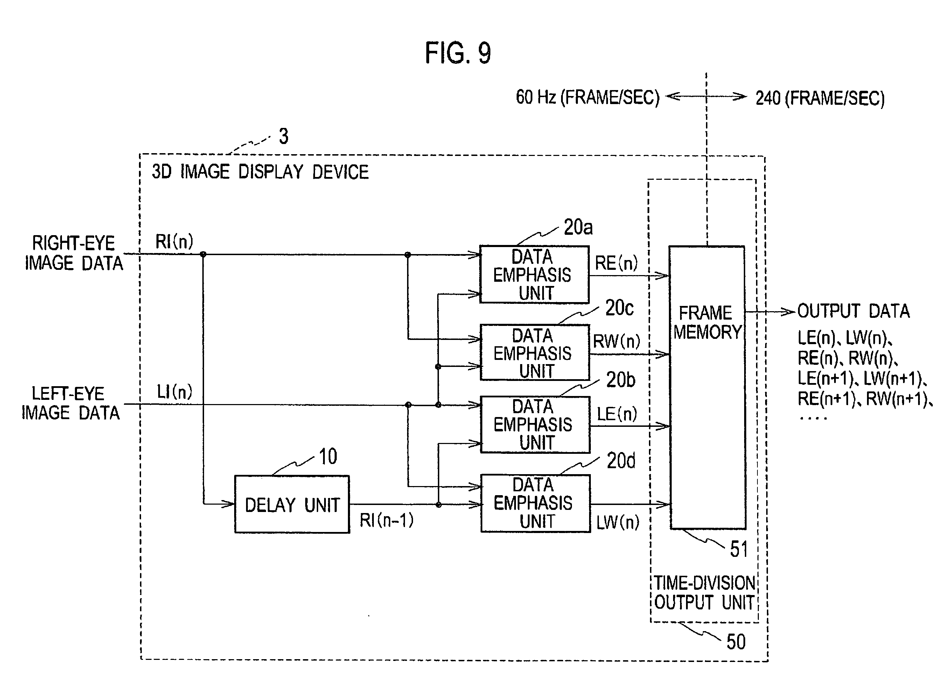

Fig. 9 is a block diagram showing the constitutional example of the 3D image display device 3 related to the third embodiment.

The difference of this device from the 3D image display device 2 of the second embodiment shown in Fig. 5 resides in a data emphasis unit having two kinds of different emphasis coefficients. That is, according to the second embodiment, the image data is switchingly displayed in the order corresponding to the left-eye image emphasis data LE(n) on completion of the time-axis emphasis processing with quad-speed rate displaying, the left-eye image data LI (n) subjected to no time-axis emphasis processing, the right-eye image emphasis data RE(n) on completion of the time-axis emphasis processing and the right-eye image data RI(n) subjected to no time-axis emphasis processing. Then, only when switching from the left-eye image data to the right-eye image data and vice versa, the left-eye image emphasis data LE(n) and the right-eye image emphasis data RE(n) on completion of the time-axis emphasis processing are outputted and thereafter, the left-eye image data LI(n) and the right-eye image data RI(n) without the time-axis emphasis processing are outputted to ensure a stable period. However, depending to the response characteristics of liquid crystal in use, such a constitution making use of only frames at the switching from the left-eye image data to the right-eye image data and vice versa may be insufficient to compensate the liquid-crystal responsibility in the time-axis emphasis processing.

In place of providing a stable period of outputting the left-eye image data LI(n) and the right-eye image data RI(n) without the time-axis emphasis processing, therefore, the 3D image display device 3 of the third embodiment is characterized by applying the time-axis emphasis processing with an impaired emphasis coefficient on the image data.

The 3D image display device 3 includes the delay part 10, the data emphasis unit 20a, the data emphasis unit 20b, a data emphasis unit 20c, a data emphasis unit 20d, and a time-division output unit 50, as shown in Fig. 9. Here, as the delay part 10, the data emphasis unit 20a and the data emphasis unit 20b are identical to those of the 3D image display devices 1 and 2 of the first and second embodiments, their descriptions are eliminated.

As shown in Fig. 9, the data emphasis unit 20c emphasizes the right-eye image data RI(n) by an emphasis coefficient K3 smaller in its emphasis gain than the emphasis coefficient K1, on the basis of a difference between the right-eye image data RI(n) and the left-eye image data LI(n) and subsequently outputs the resultant emphasized data as the right-eye image emphasis data RW(n).

The data emphasis unit 20d emphasizes the left-eye image data LI(n) by an emphasis coefficient K4 smaller in its emphasis gain than the emphasis coefficient K2, on the basis of a difference between the delayed right-eye image data R1(n-1) obtained by delaying the right-eye image data R1(n) for one frame period and the left-eye image data LI(n) and outputs the so-emphasized data as the left-eye image emphasis data LW(n).

The time-division output unit 50 inputs the right-eye image emphasis data RE(n) emphasized with the emphasis coefficient K1 by the data emphasis unit 20a, the left-eye image emphasis data LE(n) emphasized with the emphasis coefficient K2 by the data emphasis unit 20b, the right-eye image emphasis data RW(n) emphasized with the emphasis coefficient K3 by the data emphasis unit 20c and the left-eye image emphasis data LW(n) emphasized with the emphasis coefficient K4 by the data emphasis unit 20d and retains these data therein. Then, the time-division output unit 50 outputs the time-divided data based on a prescribed frequency, i.e. 240 (frame/sec). That is, only when switching from the left-eye image data to the right-eye image data and vice versa, the left-eye image emphasis data LE(n) and the right-eye image emphasis data RE(n) on completion of the time-axis emphasis processing are outputted and thereafter, the left-eye image emphasis data LW(n) and the right-eye image emphasis data RW(n) on completion of the time-axis emphasis processing using the impaired emphasis coefficients K3, K4 are outputted.

That is, in the 3D image display device 3 of the third embodiment time-divisionally outputs and displays the data, in the order corresponding to: (1) the left-eye image emphasis data LE(n) time-axis emphasized by the emphasis coefficient K1; (2) the left-eye image emphasis data LW(n) time-axis emphasized by the emphasis coefficient K3 weaker than the emphasis coefficient K1; (3) the right-eye image emphasis data RE(n) time-axis emphasized by the emphasis coefficient K2; and (4) the right-eye image emphasis data RW(n) time-axis emphasized by the emphasis coefficient K4 weaker than the emphasis coefficient K2.

For this reason, in the 3D image display device 3, the compensation of responsibility of liquid crystal is executed by the image emphasis data LE(n), RE(n) time-axis emphasized by the impaired emphasis coefficients K1, K2 only when the data outputting is switched between the left-eye image data and the right-eye image data. Subsequently, until the left or right data output has been switched to the other, the image emphasis data LW(n), RW(n) time-axis emphasized by the impaired emphasis coefficients K3, K4 are displayed, allowing a provision of metastable period of displaying the image emphasis data LW(n), RW(n) close to the stable period of the second embodiment.

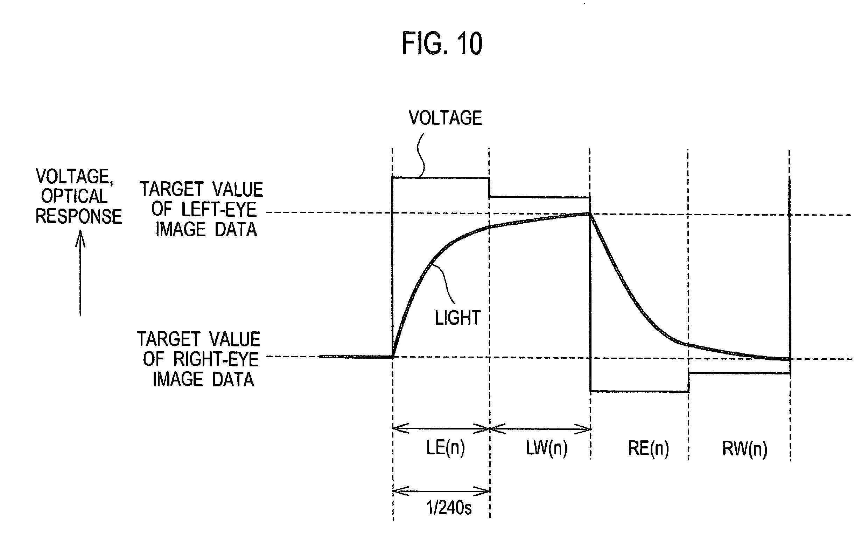

Fig. 10 is a diagram explaining the response characteristics by the time-division output unit 50 that the 3D image display device 3 includes.

As shown in Fig. 10, by outputting the left-eye image emphasis data LW(n) time-axis emphasized by the impaired emphasis coefficient K3 after the output of the left-eye image emphasis data LE(n) time-axis emphasized by the intensive emphasis coefficient K1, the outputting period of the left-eye image emphasis data LW(n) becomes a metastable period. In addition, by outputting the right-eye image emphasis data RW(n) time-axis emphasized by the impaired emphasis coefficient K4 after the output of the right-eye image emphasis data RE(n) time-axis emphasized by the intensive emphasis coefficient K2, the outputting period of the right-eye image emphasis data RW(n) becomes a metastable period. In this way, the cross talk can be improved furthermore.

It is noted that the memory throughput of the 3D image display device 3 is equal to the memory throughput of the 3D image display device 2. Concretely, when comparing this embodiment with the displaying at 240 (frame/sec) by the conventional example where the time-axis emphasis processing is performed after the time-division process of the left-eye image data and right-eye image data, it is found that the total of memory throughputs becomes 41804 (Mbit/sec) in the conventional example, while the total of memory throughputs becomes 29860 (Mbit/sec) in the 3D image display device 3 as similar to the 3D image display device 2, representing the improvement in memory throughputs.

Therefore, according to the 3D image display device 3 of the third embodiment, as the time-axis emphasis processing is performed before the time-division process as similarly to the 3D image display devices 1, 2 of the first and second embodiments, it is possible to reduce the number of input/output terminals included in the delay unit and the frame memory and also possible to lower a throughput in data transmission against the delay unit or the frame memory, allowing a reduction of its wiring area. Thus, with a simplified device constitution, it is possible to reduce a burden on the device in processing the data.

In the 3D image display device 3, especially, the response characteristics of liquid crystal is compensated by the image emphasis data LE(n), RE(n) time-axis emphasized by the intensive emphasis coefficients K1, K2 only when switching the outputting of data outputting. Subsequently, the metastable period is ensured by displaying the image emphasis data LW(n), RW(n) time-axis emphasized by the impaired emphasis coefficients K3, K4 until the outputting of data is switched between the left-eye image data and the right-eye image data. Accordingly, even if the compensation of response characteristics of liquid crystal by the data emphasis units 20a, 20b only at the switching of data outputting is insufficient depending on the characteristics of the 3D image display device, it is possible to deal with the compensation by the data emphasis units 20c 20d using the impaired emphasis coefficient K3, K4.

<Fourth Embodiment>

In common with the 3D image display devices 1 to 3 of the first to third embodiments, an intermittent displaying is caused by the shutter glasses in the stereoscopic image displaying adopting a time-division system. Thus, if the intermittent cycle of shutter glasses becomes extremely low, there is a possibility that flicker disturbance arises.

As for the occurrence of flicker disturbance, it may be derived from environment (e.g. brightness) or individual difference and therefore, the cause cannot be defined uniquely. Although a normal screen technical personnel may feel the occurrence of flicker disturbance, for example, at the frame rate of 48 ~ 50 (frame/sec), it is said that such a flicker disturbance falls in an acceptable level. In addition, it is also said that if the frame rate reaches 60 (frame/sec), an observer will recognize it hardly at all or slightly. It is also said that an observer could not recognize it at all if the frame rate reaches 75 (frame/sec), representing a detection limit. However, it should be noted that there is also individual difference in the occurrence of flicker disturbance and it may be varied depending on an environment, such as brightness.

In this way, generally, a flicker will be nearly-imperceptible to an observer if the frame rate gets more than 60 (frame/sec). Meanwhile, in the range less than 60 (frame/sec), the lower the frame rate gets, the larger the degree of flicker disturbance gets. Particularly, as many of film pictures are produced at the frame rate of 24 (frame/sec), the intermittent displaying in this cycle causes a remarkably-large flicker to be perceived by an observer.

Therefore, the fourth embodiment will be illustrated by a 3D image display device where if the input frame rate is sufficiently small, namely, less than a first value (e.g. 24 (frame/sec)), then the input frame rate is elevated to a second value producing neither flicker disturbance nor any practical problem (e.g. 48 (frame/sec)), and thereafter the time-axis emphasis processing and subsequent time-division process for stereo displaying are performed to output a stereo image at the frame rate of 96 (frame/sec). Note that, as for the conversion of frame rate, its detailed method of elevating a frame rate is not limited to only this embodiment. Alternatively, the method may be combined with any method in the first to third embodiments.

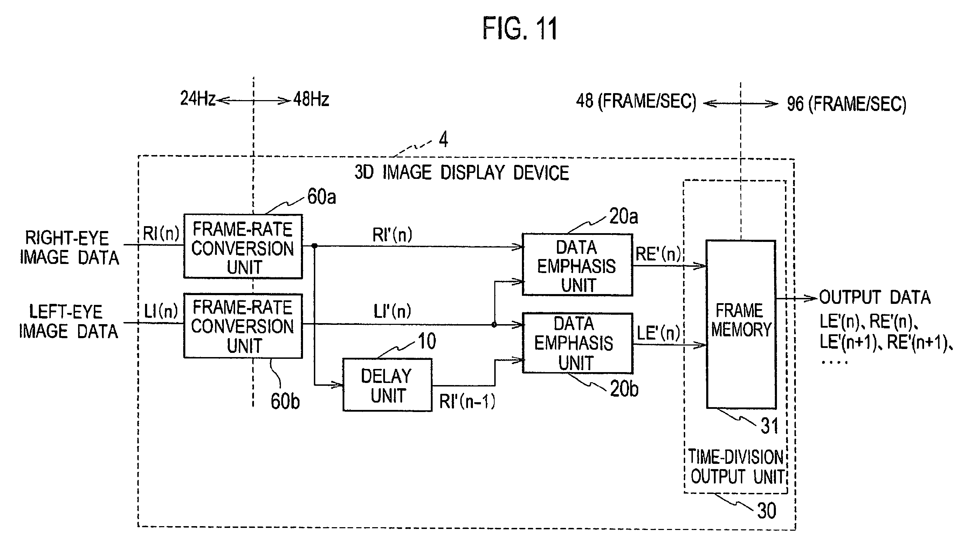

Fig. 11 is a block diagram showing the constitutional example of the 3D image display device 4 of the fourth embodiment.

As shown in Fig. 11, the 3D image display device 4 of the fourth embodiment is provided, on the preceding stage of the 3D image display device 1, with frame-rate conversion processing units 60a, 60b which convert respective frame rates of the left-eye image data LI(n) and the right-eye image data RI(n) both inputted at 24 (frame/sec) into 48 (frame/sec).

As for means of converting the frame rates in the frame-rate conversion processing units 60a, 60b, there are two kinds of representative treatments: pull-down processing of outputting cyclic image data simply; and motion-compensated frame-rate conversion processing of detecting a motion vector of image data and inserting a motion-compensated frame. However, the means of converting the frame rate is not limited to only such processes.

In the 3D image display device 4, as similar to the3D image display device 1, the delay part 10 delays the right-eye image data RI'(n) whose frame rate has been converted from 24 (frame/sec) to 48 (frame/sec) by the frame-rate conversion processing units 60a, 60b. Then, the right-eye image data RI'(n) and the left-eye image data LI'(n) are emphasized by the data emphasis unit 20a and the data emphasis unit 20b to output the resultant right-eye image emphasis data RE'(n) and left-eye image emphasis data LE'(n) each having the frame rate of 48 (frame/sec) to the time-division output unit 30.

In the time-division output unit 30, the right-eye image emphasis data RE'(n) and the left-eye image emphasis data LE'(n) outputted from the data emphasis unit 20a and the data emphasis unit 20b at 48 (frame/sec) are inputted and stored temporarily. Then, as similar to the time-division output unit 30 that the 3D image display device 1 includes, the unit 30 time-divisionally outputs these data in the order corresponding to the left-eye image emphasis data LE'(n), the right-eye image emphasis data RE'(n), ....

In the 3D image display device 4, however, as the right-eye image emphasis data RE'(n) and the left-eye image emphasis data LE'(n) are inputted into the time-division output unit 30 at 48 (frame/sec), the frame rate in outputting these data becomes will be 96 (frame/sec) as the double speed.

Therefore, according to the 3D image display device 4 of the fourth embodiment, as the time-axis emphasis processing is performed before the time-division process as similarly to the 3D image display devices 1 ~ 3 of the first to third embodiments, it is possible to reduce the number of input/output terminals included in the delay unit 10 and the frame memory 31 and also possible to lower a throughput in data transmission against the delay unit 10 or the frame memory 31, allowing a reduction of its wiring area. Thus, with a simplified device constitution, it is possible to reduce a burden on the device in processing the data.

In particular, in the 3D image display device 4, as shown in Fig. 11, the frame-rate conversion processing units 60a, 60b for converting respective frame rates (24 (frame/sec)) of the left-eye image data LI and the right-eye image data RI to 48 (frame/sec) each are arranged prior to the data emphasis units 20a, 20b and the delay unit 10. Consequently, as the right-eye image emphasis data RE'(n) and the left-eye image emphasis data LE'(n) are outputted from the time-division output unit 30 at 96 (frame/sec) as the double speed, the intermittent cycle becomes more than 60 (frame/sec), making flickers almost unnoticeable to an observer.

<Fifth Embodiment>

The fourth embodiment has been illustrated with an example of the 3D image display device where if the input frame rate is less than the first prescribed value (e.g. 24 (frame/sec)), then the input frame rate is elevated to the second prescribed value (e.g. 48 (frame/sec)) producing neither flicker disturbance nor any practical problem by the frame-rate conversion processing and thereafter, with an execution of the time-axis emphasis processing and the time-series conversion processing, a stereo image is outputted at a frame rate of 96 (frame/sec).

The fifth embodiment will be illustrated with an example of 3D image display device that performs the writing process to a frame memory at a low inputting frame rate (24 (frame/sec)) and converts the frame rate by reading the data out of the frame memory behind the data emphasis units 20a, 20b while applying the pull-down processing on the data to output a stereo image at the frame rate of 96 (frame/sec).

In the 3D image display device 1 of the first embodiment, for example, the time-division output unit 30 is adapted so as to finally output the image emphasis data time-divisionally, in the order corresponding to the left-eye image emphasis data LE(n), the right-eye image emphasis data RE(n), the left-eye image emphasis data LE(n+1) for the next frame, the right-eye image emphasis data RE(n+1) for the next frame, the left-eye image emphasis data LE(n+2) for the further next frame, .... Thus, as the left-eye image emphasis data LE(n) in time-division outputting is preceded by right-eye image emphasis data RE(n-1) in the previous frame, it would have been preferable that the previously-executed time-axis emphasis processing is directed to the right-eye image emphasis data RE(n-1) in the previous frame.

However, in the 3D image display device 5 of the fifth embodiment, the frame rate is improved since the time-division output unit time-divisionally reads the data out of the frame memory while executing the pull-down processing, that is, by reading out an identical image frame repeatedly.

The 3D image display device 5 is characterized by providing a data emphasis unit 20e which previously forms emphasis data for the left-eye image data LI(n) on the basis of its difference from the right-eye image data RI(n), as similar to the data emphasis unit for the right-eye image data RI(n).

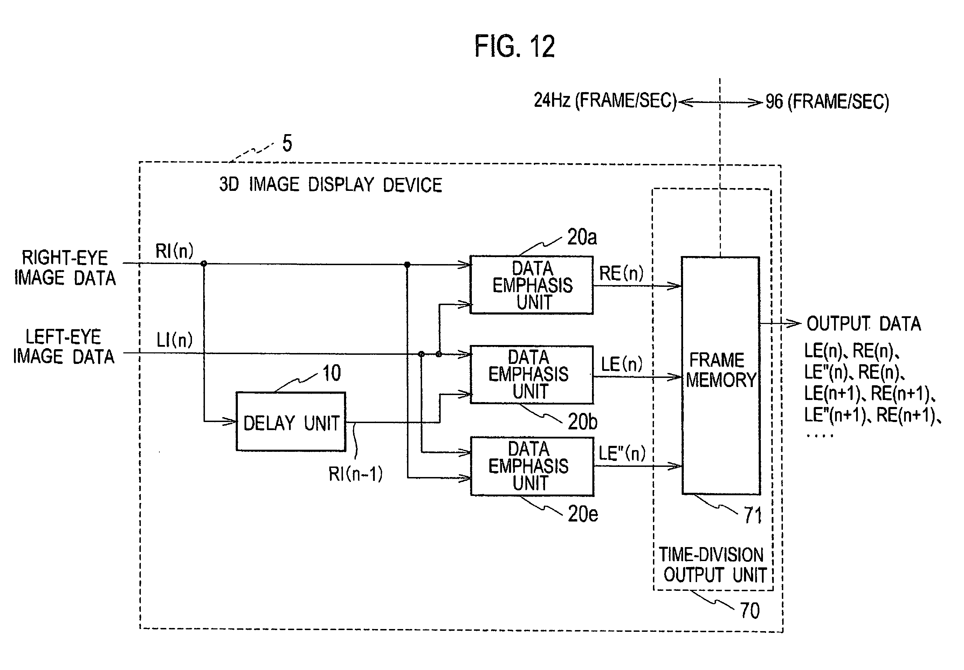

Fig. 12 is a block diagram showing the constitutional example of the 3D image display device 5 of the fifth embodiment.

In Fig. 12, the 3D image display device 5 includes the delay part 10, the data emphasis unit 20a, the data emphasis unit 20b, the data emphasis unit 20e and a time-division output unit 70.

In these constituents, however, the delay part 10, the data emphasis unit 20a and the data emphasis unit 20b are respectively identical to the corresponding constituents of the 3D image display device 1 of the first embodiment and therefore, their descriptions are eliminated.

The right-eye image data RI(n) and the left-eye image data LI(n) are inputted into the data emphasis unit 20e at the same timing as the case of the data emphasis unit 20a. The left-eye image data LI(n) is emphasized by multiplying an emphasis coefficient K5 to a difference (LI(n) - RI(n)) between these data and successively adding the multiplication result to the left-eye image data LI(n), so that the resultant left-eye image emphasis data LE"(n) is outputted to the time-division output unit 70. Note that this emphasis coefficient K5 may be set to be smaller than, larger than or equal to the emphasis coefficient K2 or the emphasis coefficient K4.

Then, in order to prevent flicker etc. on the ground that the input frame rate (24 (frame/sec)) of the image data is low, the time-division output unit 70 time-divisionally outputs the left-eye image emphasis data LE(n), the right-eye image emphasis data RE(n) and the left-eye image emphasis data LE"(n), which are stored in the frame memory 71, in this order.

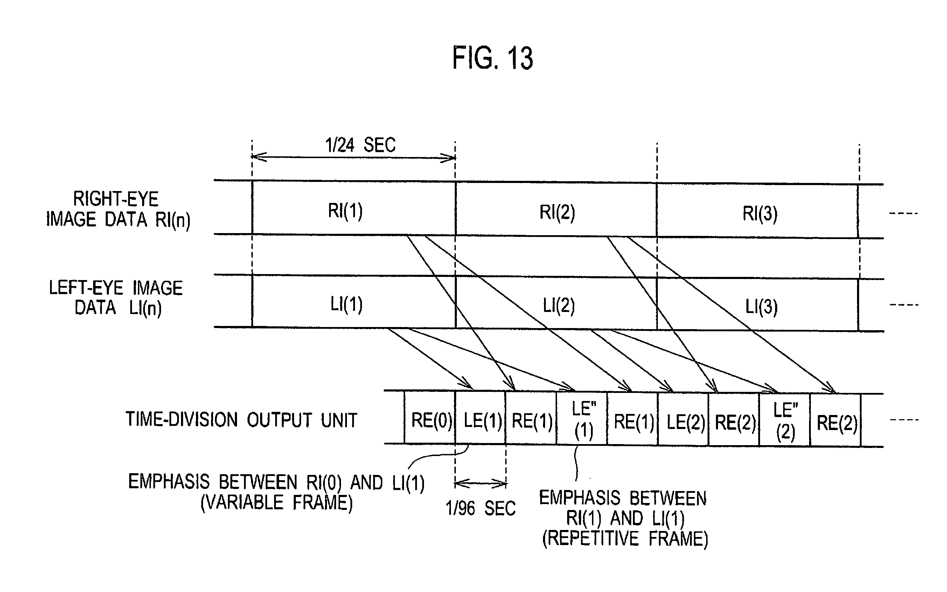

Fig. 13 is a diagram showing the state after the time-division process in the time-division output unit 70 that the 3D image display device 5 includes.

Assume here that the input frame rate to the time-division output unit 70 is 24 (frame/sec), the switching cycle between the left-eye image data and the right-eye image data is 48 (frame/sec) and the readout cycle of data from the frame memory is 96 (frame/sec).

With the time-division process while executing the pull-down processing, the time-division output unit 70 of the 3D image display device 5 time-divisionally outputs the data at the frame rate of 96 (frame/sec) as the quad-speed by pull-down processing respective image data, in other words, by reading out the identical frame repeatedly (assume here, "twice" for the sake of convenience) in the order corresponding to the left-eye image emphasis data LE(n), the right-eye image emphasis data RE(n), the left-eye image emphasis data LE"(n) and the right-eye image emphasis data RE(n) at the timing when the identical frame "n" is inputted, and subsequently in the order corresponding to the left-eye image emphasis data LE(n+1), the right-eye image emphasis data RE(n+1), the left-eye image emphasis data LE"(n+1) and the right-eye image emphasis data RE(n+1) at the timing when the next frame "n+1" is inputted.

That is, in the time-division output unit 70 of the 3D image display device 5, while the identical data is outputted as the right-eye image emphasis data RE(n) twice repeatedly, the left-eye image emphasis data LE(n) is outputted at the first outputting after switching the frame, and not the left-eye image emphasis data LE(n) but the left-eye image emphasis data LE"(n) is outputted at the timing when the second repeated data is outputted.

Consequently, as shown in Fig. 13, when the right-eye image emphasis data RE(1), RE(2), ... and the left-eye image emphasis data LE(1), LE(2), ... are inputted to the 3D image display device 5 at 24 (frame/sec) each, the image emphasis data will be outputted from the time-division output unit 70 while time-dividing the data at the frame rate of 96 (frame/sec) as the quad-speed, in chronologic order corresponding to LE (1), RE(1), LE"(1), RE (1), LE (2), RE (2), LE (2)", RE (2), ....

Thus, according to the 3D image display device 5 of the fifth embodiment of the present invention, as the left-eye image emphasis data LE(n), the right-eye image emphasis data RE(n) and the left-eye image emphasis data LE"(n) all stored in the frame memory 71 are outputted time-divisionally while converting to the frame rate of 96 (frame/sec) as the quad-speed, it is possible to prevent flicker etc. on the ground that the input frame rate (24 (frame/sec)) of the image data is low.

Moreover, according to the 3D image display device 5, when the time-division output unit 70 time-divisionally reads out the data from the frame memory 71 while executing the pull-down processing, namely, reads out the identical image frame repeatedly, the image data preceding to the secondly-readout left-eye image emphasis data LE"(n) becomes the left-eye image emphasis data LE"(n) time-axis emphasized by a different emphasis coefficient K5 although the preceding image data is based on the same image data R(n), L(n) as the left-eye image emphasis data LE"(n) in the same frame. Thus, it is possible to provide an observer with more natural images.

Next, the improvement in the memory throughput due to this constitution will be described in comparison with the conventional example where the time-axis emphasis processing is executed after the time-division process.

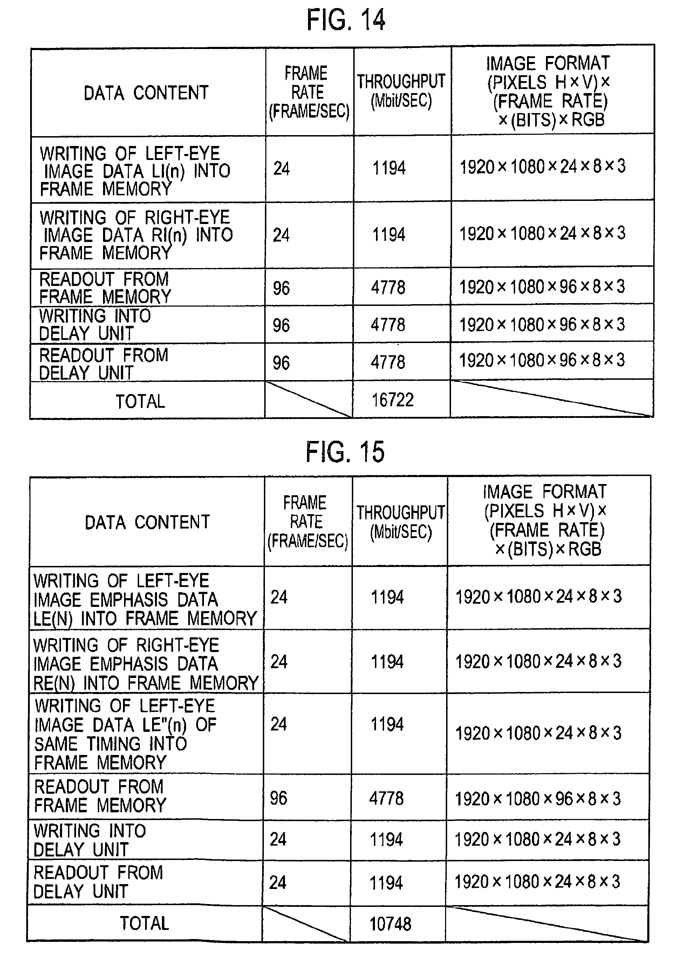

Fig. 14 is a diagram showing the memory throughput of the conventional example where the left-eye image data and the right-eye image data are time-axis emphasized after the time-division process, at 240 (frame/sec) frame-rate displaying. Fig. 15 is a diagram showing the memory throughput when the time-division output unit 70 of the 3D image display device 5 of the fifth embodiment reads out the data from the frame memory 71 time-divisionally while executing the pull-down processing.

We compare the conventional example with the present invention with respect to the total of throughputs, as shown in Fig. 14. Thus, in the conventional example where the left-eye image data LI(n) and the right-eye image data RI(n) are emphasized in time-axis after the time-dividing process, the total of throughputs becomes 16722 (Mbit/second): the throughput for writing the left-eye image data LI(n) and the right-eye image data RI(n) into the frame memory at 24 (frame/sec) is 1194 (Mbit/sec) each; the throughput for reading out of the frame memory and the throughput for writing/reading out of the delay unit at 96 (frame/sec) are 4778 (Mbit/sec), respectively.

On the other hand, as shown in Fig. 15, according to the 3D image display device 5, the throughputs for writing the left-eye image emphasis data LE(n), the right-eye image emphasis data RE(n) and the left-eye image emphasis data LE"(n) into the frame memory 71 at 24 (frame/sec) become 1194 (Mbit/second) respectively. In addition, as the throughput for reading out of the frame memory 71 at 96 (frame/sec) becomes 4778 (Mbit/second) and the throughput for writing/reading out of the delay unit 10 at 24 (frame/sec) becomes 1194 (Mbit/second), the total of throughputs becomes 10748 (Mbit/second).

Thus, in the conventional example where the left-eye image data and the right-eye image data are emphasized in time-axis after the time-division process, the total of memory throughputs becomes 16722 (Mbit/second), while the total of memory throughputs in the 3D image display device 5 becomes 10748 (Mbit/second), representing an improvement in the memory throughputs.

Therefore, according to the 3D image display device 5 of the fifth embodiment, similarly to the 3D image display devices 1 to 4 of the first to fourth embodiments, as the time-axis emphasis processing is performed before the time-division process, it is possible to reduce the number of input/output terminals included in the delay unit 10 and the frame memory 71 and also possible to lower a throughput in data transmission against the delay unit 10 and the frame memory 71, allowing a reduction of its wiring area. Thus, with a simplified device constitution, it is possible to reduce a burden on the device in processing the data.

In particular, in the general frame-rate conversion process, a high-capacity frame memory is required in either the pull-down processing or the motion compensation processing. However, according to the 3D image display device 5, it is possible to reduce the capacity of the frame memory 71 as what is needed is only to add an input of the left-eye image emphasis data LE"(n).

In the 3D image display device 5, additionally, as the time-division output unit 70 time-divisionally outputs the left-eye image emphasis data LE(n), the right-eye image emphasis data RE(n) and the left-eye image emphasis data LE"(n) all stored in the frame memory 71 while converting to the frame rate of 96 (frame/sec) corresponding to the quad-speed rate of 24 (frame/sec) as the input frame rate, it is possible to prevent flicker etc. on the ground that the input frame rate (24 (frame/sec)) of the image data is low.

Moreover, according to the 3D image display device 5, when the time-division output unit 70 time-divisionally reads out the data from the frame memory 71 while executing the pull-down processing, namely, reads out the identical image frame repeatedly, the image data preceding to the secondly-readout left-eye image emphasis data LE"(n) becomes the left-eye image emphasis data LE"(n) time-axis emphasized by a different emphasis coefficient K5 although the preceding image data is based on the same image data R(n), L(n) as the left-eye image emphasis data LE"(n) in the same frame. Thus, it is possible to provide an observer with more natural images.

Although the 3D image display device 5 of the fifth embodiment has been described with an example of the application of the 3D image display device 1 of the first embodiment shown in Fig. 1, the fifth embodiment may be applied to the 3D image display device 2 of the second embodiment shown in Fig. 2. In that case, what is needed is only to adopt a constitution of outputting the left-eye image emphasis data LE"(n) time-axis emphasized by data of the same frame "n" to the frame memory 41. Alternatively, the fifth embodiment may be applied to the 3D image display device 3 of the third embodiment shown in Fig. 9. Such an application could be realized by a constitution of providing the frame memory 51 with the left-eye image emphasis data LE"(n) time-axis emphasized by data of the same frame "n" as well as left-eye image emphasis data LW'(n) weakly-emphasized in comparison with the left-eye image emphasis data LE"(n).

In addition, although the order of time-divisional outputting the image emphasis data for left and right eyes corresponds to "left eye", "right eye", "left eye", ... in the descriptions of the first to fifth embodiments, the invention is not limited to this order, so long as the combination and synchronization with shutter glasses are attained. That is, as a matter of course, the data may be time-divisionally outputted in the opposite order corresponding to "right eye", "left eye", "right eye", ....

Again, although the descriptions of the first to fifth embodiments assume that the inputted right-eye image data RI(n) and the inputted left-eye image data LI(n) are provided in parallel, it is well known that there are various formats for transmitting the right-eye image data RI(n) and the left-eye image data LI(n) for 3D image displaying and therefore, there is no limitation with respect to means for decoding these formats. In a situation that the right-eye image data RI(n) and the inputted left-eye image data LI(n) are not provided in parallel, as a matter of course, the display device may be constructed so as to produce the left-eye image data LI(n) on the basis of the inputted right-eye image data RI(n) or conversely, the right-eye image data RI(n) on the basis of the inputted left-eye image data LI(n). Alternatively, of course, the display device may be constructed so as to produce both of the right-eye image data RI(n) and the left-eye image data LI(n) on the basis of normal image data for 2D display and subsequently time-divisionally output these data after the time-axis emphasis processing, as with the first to fifth embodiments.

Moreover, although the 3D image display device is constructed in hardware throughout the descriptions of the first to fifth embodiments, the present invention is not limited to only this constitution. Thus, as a matter of course, the invention may be embodied in software by a program for coding the function of each 3D image display device of the first to fifth embodiments and CPU etc. for executing the program.

Moreover, although the first to fifth embodiments have been described by way of an example of a liquid-crystal 3D image display device, the present invention is also applicable to any other 3D image display device, such as organic EL, plasma, a cathode-ray tube, SED display device, etc.

**REFERENCE SIGNS LIST**

1 ~ 5 ... 3D Image Display Device
10 ⋯ Delay Unit
20a ⋯ Data Emphasis Unit
20b ⋯ Data Emphasis Unit
20c ⋯ Data Emphasis Unit
20d ⋯ Data Emphasis Unit
20e ⋯ Data Emphasis Unit
21b ⋯ Subtractor
22b ⋯ Emphasis Coefficient Multiplier
23b ⋯ Adder
30, 40, 50, 70 ⋯ Time-Division Output Unit
31, 41, 51, 71 ⋯ Frame Memory
60a, 60b ⋯ Frame-Rate Conversion Processing Unit

**Claims**

1. A 3D image display device comprising:

   a delay unit configured to delay one image data consisting of either right-eye image data or left-eye image data by one frame period and output the one image data as delayed data;
   a first data emphasis unit configured to emphasize the one image data by a first emphasis coefficient on a basis of a difference between the right-eye image data and the left-eye image data and output a first emphasis data;
   a second data emphasis unit configured to emphasize the other image data of either the right-eye image data or the left-eye image data by a second emphasis coefficient on the basis of a difference between the other image data and the delay data delayed one frame period by the delay unit and output a second emphasis data; and
   a time-division output unit configured to store the first emphasis data and the second emphasis data and output the first emphasis data and the second emphasis data at a prescribed frame rate time-divisionally.

2. A 3D image display device comprising:

   a delay unit configured to delay one image data consisting of either right-eye image data or left-eye image data by one frame period and output the one image data as delayed data;
   a first data emphasis unit configured to emphasize the one image data by a first emphasis coefficient on a basis of a difference between the right-eye image data and the left-eye image data and output a first emphasis data;
   a second data emphasis unit configured to emphasize the other image data of either the right-eye image data or the left-eye image data by a second emphasis coefficient on the basis of a difference between the other image data and the delay data delayed one frame period by the delay unit and output a second emphasis data; and
   a time-division output unit configured to store the first emphasis data, the one image data, the second emphasis data and the other image data and output these data in the order corresponding to the first emphasis data, the one image data, the second emphasis data and the other image data at a prescribed frame rate time-divisionally.

3. A 3D image display device comprising:

   a delay unit configured to delay one image data consisting of either right-eye image data or left-eye image data by one frame period and output the one image data as delayed data;

a first data emphasis unit configured to emphasize the one image data by a first emphasis coefficient on a basis of a difference between the right-eye image data and the left-eye image data and output a first emphasis data; a second data emphasis unit configured to emphasize the other image data of either the right-eye image data or the left-eye image data by a second emphasis coefficient on the basis of a difference between the other image data and the delay data delayed one frame period by the delay unit and output a second emphasis data; a third data emphasis unit configured to emphasize the one image data by a third emphasis coefficient smaller in its emphasis gain than the first emphasis coefficient on the basis of a difference between the one image data and the other image data and output a third emphasis data; a fourth data emphasis unit configured to emphasize the one image data by a fourth emphasis coefficient smaller in its emphasis gain than the second emphasis coefficient on the basis of a difference between the other image data and the delay data and output a fourth emphasis data; and a time-division output unit configured to store the first emphasis data, the third emphasis data, the second emphasis data and the fourth emphasis data and output these data in the order corresponding to the first emphasis data, the third emphasis data, the second emphasis data and the fourth emphasis data at a prescribed frame rate time-divisionally.

4. The 3D image display device of claim 1 or 2, further comprising:

a frame-rate converting unit configured to convert the frame rate to a frame rate more than a second prescribed value and output a resultant frame rate to the delay unit and the first and second data emphasis units when a frame rate of the left-eye image data and the right-eye image data is less than a first prescribed value.

5. A 3D image display device comprising:

a delay unit configured to delay one image data consisting of either right-eye image data or left-eye image data by one frame period and output the one image data as delayed data; a first data emphasis unit configured to emphasize the one image data by a first emphasis coefficient on a basis of a difference between the right-eye image data and the left-eye image data and output a first emphasis data; a second data emphasis unit configured to emphasize the other image data of either the right-eye image data or the left-eye image data by a second emphasis coefficient on the basis of a difference between the other image data and the delay data delayed one frame period by the delay unit and output a second emphasis data; a fifth data emphasis unit configured to emphasize one data of the one image data and the other image data, the one data being displayed in advance of the other data in chronologic order based on an identical frame, by a fifth emphasis coefficient on the basis of a difference between the one image data and the other image data and output a fifth emphasis data; and a time-division output unit configured to store the first emphasis data, the second emphasis data and the fifth emphasis data, and time-divide and output these data in the order corresponding to one emphasis data of the first emphasis data and the second emphasis data, the one emphasis data being displayed in advance of the other emphasis data in chronologic order, the other emphasis data, the fifth emphasis data, and the other emphasis data, thereby converting the first, second and fifth data more than a prescribed frequency for outputting.

# FIG. 1

60 (FRAME/SEC) ←——→ 120 (FRAME/SEC)

3D IMAGE DISPLAY DEVICE ⟋1

RIGHT-EYE IMAGE DATA RI(n) → [DATA EMPHASIS UNIT 20a] RE(n) →

LEFT-EYE IMAGE DATA LI(n) → [DATA EMPHASIS UNIT 20b] LE(n) →

[DELAY UNIT 10] RI(n-1)

[FRAME MEMORY 31] → OUTPUT DATA

LE(n)、RE(n)、
LE(n+1)、RE(n+1)、
. . . .

TIME-DIVISION OUTPUT UNIT 30

EP 2 555 529 A1

# FIG. 2

DATA EMPHASIS UNIT — 20b

LI(n) → SUBTRACTOR (21b) → (LI(n)-RI(n-1)) → EMPHATIC-COEFFICIENT MULTIPLIER (22b) → ADDER (23b) → OUTPUT DATA

RI(n-1) → SUBTRACTOR

$$LE(n)=LI(n)+K2(LI(n)-RI(n-1))$$

## FIG. 3

| DATA CONTENT | FRAME RATE (FRAME/SEC) | THROUGHPUT (Mbit/SEC) | IMAGE FORMAT (PIXELS H × V) × (FRAME RATE) × (BITS) × RGB |
|---|---|---|---|
| WRITING OF LEFT-EYE IMAGE DATA LI(n) INTO FRAME MEMORY | 60 | 2986 | 1920 × 1080 × 60 × 8 × 3 |
| WRITING OF RIGHT-EYE IMAGE DATA RI(n) INTO FRAME MEMORY | 60 | 2986 | 1920 × 1080 × 60 × 8 × 3 |
| READOUT FROM FRAME MEMORY | 120 | 5972 | 1920 × 1080 × 120 × 8 × 3 |
| WRITING INTO DELAY UNIT | 120 | 5972 | 1920 × 1080 × 120 × 8 × 3 |
| READOUT FROM DELAY UNIT | 120 | 5972 | 1920 × 1080 × 120 × 8 × 3 |
| TOTAL | | 23888 | |

## FIG. 4

| DATA CONTENT | FRAME RATE (FRAME/SEC) | THROUGHPUT (Mbit/SEC) | IMAGE FORMAT (PIXELS H × V) × (FRAME RATE) × (BITS) × RGB |
|---|---|---|---|
| WRITING OF LEFT-EYE IMAGE EMPHASIS DATA LE(n) INTO FRAME MEMORY | 60 | 2986 | 1920 × 1080 × 60 × 8 × 3 |
| WRITING OF RIGHT-EYE IMAGE EMPHASIS DATA RE(n) INTO FRAME MEMORY | 60 | 2986 | 1920 × 1080 × 60 × 8 × 3 |
| READOUT FROM FRAME MEMORY | 120 | 5972 | 1920 × 1080 × 120 × 8 × 3 |
| WRITING INTO DELAY UNIT | 60 | 2986 | 1920 × 1080 × 60 × 8 × 3 |
| READOUT FROM DELAY UNIT | 60 | 2986 | 1920 × 1080 × 60 × 8 × 3 |
| TOTAL | | 20902 | |

# FIG. 5

60 (FRAME/SEC) ⟷ 240 (FRAME/SEC)

2

3D IMAGE DISPLAY DEVICE

RIGHT-EYE IMAGE DATA → RI(n)

20a
DATA EMPHASIS UNIT → RE(n)

RI(n)

LEFT-EYE IMAGE DATA → LI(n)

10
DELAY UNIT

RI(n-1)

DATA EMPHASIS UNIT → LE(n)

20b

LI(n)

FRAME MEMORY → OUTPUT DATA
LE(n)、LI(n)、
RE(n)、RI(n)、
LE(n+1)、LI(n+1)、
RE(n+1)、RI(n+1)、
....

41

TIME-DIVISION OUTPUT UNIT

40

EP 2 555 529 A1

# FIG. 6

VOLTAGE, OPTICAL RESPONSE →

VOLTAGE

TARGET VALUE OF LEFT-EYE IMAGE DATA

LIGHT

TARGET VALUE OF RIGHT-EYE IMAGE DATA

LE(n)  LI(n)  RE(n)  RI(n)

1/240s

EP 2 555 529 A1

## FIG. 7

| DATA CONTENT | FRAME RATE (FRAME/SEC) | THROUGHPUT (Mbit/SEC) | IMAGE FORMAT (PIXELS H×V)× (FRAME RATE) ×(BITS)×RGB |
|---|---|---|---|
| WRITING OF LEFT-EYE IMAGE DATA LI(n) INTO FRAME MEMORY | 60 | 2986 | 1920×1080×60×8×3 |
| WRITING OF RIGHT-EYE IMAGE DATA RI(n) INTO FRAME MEMORY | 60 | 2986 | 1920×1080×60×8×3 |
| READOUT FROM FRAME MEMORY | 240 | 11944 | 1920×1080×240×8×3 |
| WRITING INTO DELAY UNIT | 240 | 11944 | 1920×1080×240×8×3 |
| READOUT FROM DELAY UNIT | 240 | 11944 | 1920×1080×240×8×3 |
| TOTAL | | 41804 | |

## FIG. 8

| DATA CONTENT | FRAME RATE (FRAME/SEC) | THROUGHPUT (Mbit/SEC) | IMAGE FORMAT (PIXELS H×V)× (FRAME RATE) ×(BITS)×RGB |
|---|---|---|---|
| WRITING OF LEFT-EYE IMAGE EMPHASIS DATA LE(n) INTO FRAME MEMORY | 60 | 2986 | 1920×1080×60×8×3 |
| WRITING OF LEFT-EYE IMAGE DATA LI(n) INTO FRAME MEMORY | 60 | 2986 | 1920×1080×60×8×3 |
| WRITING OF RIGHT-EYE IMAGE EMPHASIS DATA RE(n) INTO FRAME MEMORY | 60 | 2986 | 1920×1080×60×8×3 |
| WRITING OF RIGHT-EYE IMAGE DATA RI(n) INTO FRAME MEMORY | 60 | 2986 | 1920×1080×60×8×3 |
| READOUT FROM FRAME MEMORY | 240 | 5972 | 1920×1080×120×8×3 |
| WRITING INTO DELAY UNIT | 60 | 2986 | 1920×1080×60×8×3 |
| READOUT FROM DELAY UNIT | 60 | 2986 | 1920×1080×60×8×3 |
| TOTAL | | 29860 | |

# FIG. 9

60 Hz (FRAME/SEC) ⟷ 240 (FRAME/SEC)

3D IMAGE DISPLAY DEVICE — 3

RIGHT-EYE IMAGE DATA → RI(n)

LEFT-EYE IMAGE DATA → LI(n)

DELAY UNIT — 10 → RI(n-1)

DATA EMPHASIS UNIT — 20a → RE(n)

DATA EMPHASIS UNIT — 20c → RW(n)

DATA EMPHASIS UNIT — 20b → LE(n)

DATA EMPHASIS UNIT — 20d → LW(n)

FRAME MEMORY — 51

TIME-DIVISION OUTPUT UNIT — 50

→ OUTPUT DATA

LE(n)、LW(n)、
RE(n)、RW(n)、
LE(n+1)、LW(n+1)、
RE(n+1)、RW(n+1)、
....

EP 2 555 529 A1

# FIG. 10

VOLTAGE

VOLTAGE, OPTICAL RESPONSE ↑

TARGET VALUE OF LEFT-EYE IMAGE DATA

LIGHT

TARGET VALUE OF RIGHT-EYE IMAGE DATA

LE(n)  LW(n)  RE(n)  RW(n)

1/240s

EP 2 555 529 A1

FIG. 11

24Hz ←---→ 48Hz

48 (FRAME/SEC) ←---→ 96 (FRAME/SEC)

4

3D IMAGE DISPLAY DEVICE

60a

RIGHT-EYE IMAGE DATA | RI(n) → | FRAME-RATE CONVERSION UNIT | → RI'(n)

20a

DATA EMPHASIS UNIT | RE'(n) →

LEFT-EYE IMAGE DATA | LI(n) → | FRAME-RATE CONVERSION UNIT | → LI'(n)

10

DELAY UNIT | RI'(n-1)

DATA EMPHASIS UNIT | LE'(n) →

20b

FRAME MEMORY

31

TIME-DIVISION OUTPUT UNIT

30

OUTPUT DATA
LE'(n)、RE'(n)、
LE'(n+1)、RE'(n+1)、
・・・・

60b

# FIG. 12

24Hz (FRAME/SEC) ⟷ 96 (FRAME/SEC)

3D IMAGE DISPLAY DEVICE — 5

RIGHT-EYE IMAGE DATA — RI(n)

LEFT-EYE IMAGE DATA — LI(n)

DELAY UNIT — 10

RI(n-1)

DATA EMPHASIS UNIT — 20a → RE(n)

DATA EMPHASIS UNIT — 20b → LE(n)

DATA EMPHASIS UNIT — 20e → LE"(n)

FRAME MEMORY — 71

TIME-DIVISION OUTPUT UNIT — 70

OUTPUT DATA
LE(n), RE(n),
LE"(n), RE(n),
LE(n+1), RE(n+1),
LE"(n+1), RE(n+1),
. . . .

# FIG. 13

RIGHT-EYE IMAGE DATA RI(n) — 1/24 SEC — RI(1), RI(2), RI(3) ----

LEFT-EYE IMAGE DATA LI(n) — LI(1), LI(2), LI(3) ----

TIME-DIVISION OUTPUT UNIT — RE(0) | LE(1) | RE(1) | LE"(1) | RE(1) | LE(2) | RE(2) | LE"(2) | RE(2) ----

EMPHASIS BETWEEN RI(0) AND LI(1) (VARIABLE FRAME)

1/96 SEC

EMPHASIS BETWEEN RI(1) AND LI(1) (REPETITIVE FRAME)

## FIG. 14

| DATA CONTENT | FRAME RATE (FRAME/SEC) | THROUGHPUT (Mbit/SEC) | IMAGE FORMAT (PIXELS H×V)× (FRAME RATE) ×(BITS)×RGB |
|---|---|---|---|
| WRITING OF LEFT-EYE IMAGE DATA LI(n) INTO FRAME MEMORY | 24 | 1194 | 1920×1080×24×8×3 |
| WRITING OF RIGHT-EYE IMAGE DATA RI(n) INTO FRAME MEMORY | 24 | 1194 | 1920×1080×24×8×3 |
| READOUT FROM FRAME MEMORY | 96 | 4778 | 1920×1080×96×8×3 |
| WRITING INTO DELAY UNIT | 96 | 4778 | 1920×1080×96×8×3 |
| READOUT FROM DELAY UNIT | 96 | 4778 | 1920×1080×96×8×3 |
| TOTAL | | 16722 | |

## FIG. 15

| DATA CONTENT | FRAME RATE (FRAME/SEC) | THROUGHPUT (Mbit/SEC) | IMAGE FORMAT (PIXELS H×V)× (FRAME RATE) ×(BITS)×RGB |
|---|---|---|---|
| WRITING OF LEFT-EYE IMAGE EMPHASIS DATA LE(N) INTO FRAME MEMORY | 24 | 1194 | 1920×1080×24×8×3 |
| WRITING OF RIGHT-EYE IMAGE EMPHASIS DATA RE(N) INTO FRAME MEMORY | 24 | 1194 | 1920×1080×24×8×3 |
| WRITING OF LEFT-EYE IMAGE DATA LE"(n) OF SAME TIMING INTO FRAME MEMORY | 24 | 1194 | 1920×1080×24×8×3 |
| READOUT FROM FRAME MEMORY | 96 | 4778 | 1920×1080×96×8×3 |
| WRITING INTO DELAY UNIT | 24 | 1194 | 1920×1080×24×8×3 |
| READOUT FROM DELAY UNIT | 24 | 1194 | 1920×1080×24×8×3 |
| TOTAL | | 10748 | |

<table>
<tr><td colspan="3"><strong>INTERNATIONAL SEARCH REPORT</strong></td><td colspan="2">International application No.<br>PCT/JP2011/056536</td></tr>
</table>

**A. CLASSIFICATION OF SUBJECT MATTER**
*H04N13/04*(2006.01)i, *G09G3/20*(2006.01)i, *G09G3/36*(2006.01)i

According to International Patent Classification (IPC) or to both national classification and IPC

**B. FIELDS SEARCHED**

Minimum documentation searched (classification system followed by classification symbols)
H04N13/04, G09G3/20, G09G3/36

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-11184 A  (Toshiba Corp.),<br>14 January 2010 (14.01.2010),<br>entire text; all drawings<br>& US 2009/0322858 A1 | 1-5 |
| A | JP 2009-25436 A  (Seiko Epson Corp.),<br>05 February 2009 (05.02.2009),<br>entire text; all drawings<br>(Family: none) | 1-5 |
| A | JP 2006-157775 A  (Mitsubishi Electric Corp.),<br>15 June 2006 (15.06.2006),<br>entire text; all drawings<br>(Family: none) | 1-5 |

☒ Further documents are listed in the continuation of Box C.　　☐ See patent family annex.

| | |
|---|---|
| *　Special categories of cited documents:<br>"A"　document defining the general state of the art which is not considered<br>　　to be of particular relevance<br>"E"　earlier application or patent but published on or after the international<br>　　filing date<br>"L"　document which may throw doubts on priority claim(s) or which is<br>　　cited to establish the publication date of another citation or other<br>　　special reason (as specified)<br>"O"　document referring to an oral disclosure, use, exhibition or other means<br>"P"　document published prior to the international filing date but later than<br>　　the priority date claimed | "T"　later document published after the international filing date or priority<br>　　date and not in conflict with the application but cited to understand<br>　　the principle or theory underlying the invention<br>"X"　document of particular relevance; the claimed invention cannot be<br>　　considered novel or cannot be considered to involve an inventive<br>　　step when the document is taken alone<br>"Y"　document of particular relevance; the claimed invention cannot be<br>　　considered to involve an inventive step when the document is<br>　　combined with one or more other such documents, such combination<br>　　being obvious to a person skilled in the art<br>"&"　document member of the same patent family |

| | |
|---|---|
| Date of the actual completion of the international search<br>　　25 May, 2011 (25.05.11) | Date of mailing of the international search report<br>　　07 June, 2011 (07.06.11) |
| Name and mailing address of the ISA/<br>　　Japanese Patent Office | Authorized officer |
| Facsimile No. | Telephone No. |

**INTERNATIONAL SEARCH REPORT**

International application No.

PCT/JP2011/056536

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2003-264846 A (Toshiba Corp.), 19 September 2003 (19.09.2003), entire text; all drawings & US 2003/0174110 A1 | 1-5 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006157775 A

- JP 2006337448 A